# EUROPÄISCHE PATENTSCHRIFT

(11) **EP 3 103 274 B1**
(45) Veröffentlichungstag und Bekanntmachung des Hinweises auf die Patenterteilung: **18.11.2020**
(21) Anmeldenummer: 15702770.7
(22) Anmeldetag: 05.02.2015
(51) Int. Cl.: H04W 12/00, H04W 12/06, H04L 29/06, H04W 52/02, H04W 4/80, H04W 76/11

(54) **DATENKOMMUNIKATIONSVORRICHTUNG UND VERFAHREN ZUR DATENKOMMUNIKATION**
DATA COMMUNICATION DEVICE AND METHOD FOR DATA COMMUNICATION
DISPOSITIF DE COMMUNICATION DE DONNÉES ET PROCÉDÉ DE COMMUNICATION DE DONNÉES

(30) Priorität: 07.02.2014 DE 102014101526
(43) Veröffentlichungstag der Anmeldung: 14.12.2016
(73) Patentinhaber: Aesculap AG, 78532 Tuttlingen (DE)
(72) Erfinder: WEHRLE, Christian, 78234 Engen (DE); GÖGGELMANN, Andreas, 74379 Ingersheim (DE)
(74) Vertreter: Winter, Brandl, Fürniss, Hübner, Röss, Kaiser, Polte - Partnerschaft mbB
(86) Internationale Anmeldenummer: PCT/EP2015/052366
(87) Internationale Veröffentlichungsnummer: WO 2015/118047

(56) Entgegenhaltungen:
- WO-A1-2013/098262
- US-A1- 2008 167 088
- US-A1- 2011 210 830

## Beschreibung

Die vorliegende Erfindung betrifft eine Datenkommunikationsvorrichtung und ein Verfahren zur Datenkommunikation.

Es gibt Funkmodule, die über Funk, d.h. drahtlos, miteinander kommunizieren. Damit die Funkmodule miteinander kommunizieren können, muss die jeweilige Adresse des anderen Funkmoduls bekannt sein oder per Funk detektiert werden können.

Aus Sicherheitsgründen, beispielsweise aus Schutz vor Angriffen per DoS (Denial of Service), sollten die Funkmodule für andere Funkmodule, mit denen keine Kommunikation gewünscht ist, zumindest die meiste Zeit "unsichtbar" bzw. nicht erkennbar sein.

Dieses kann dadurch gelöst werden, dass die Adresse des Kommunikationspartners bereits bekannt ist, weil sie beispielsweise in dem Funkmodul, das mit dem Kommunikationspartner zu kommunizieren wünscht, gespeichert ist. Dieses ist jedoch nicht praktikabel, wenn die Module (häufig) bzw. Geräte, in denen sie verbaut sind, ausgetauscht werden müssen oder wenn ein Pool aus vielen Modulen bzw. Geräten eingesetzt wird und der Kommunikationspartner aus dem Pool im Voraus nicht bekannt ist.

Eine andere Lösung besteht darin, beispielsweise per Knopfdruck an dem jeweiligen Modul bzw. Gerät diese "sichtbar" (z.B. Aktivieren eines "Sichtbar"-Modus) zu machen. Dieses ist umständlich, da es eine entsprechende Tätigkeit eines Nutzers erforderlich macht. Außerdem entstehen zusätzliche Kosten für entsprechende externe Schalter.

Besonders für Geräte, die räumlich getrennt und/oder fest verbaut sind (z.B. Deckenmontage), so dass der Nutzer keine Eingriffsmöglichkeit hat, gibt es keine Möglichkeit, dass diese einander nicht bekannten Module eine Kommunikationsverbindung eingehen.

Es sind diverse Funktechniken mit unterschiedlichen Eigenschaften wie Datendurchsatz, Datenübertragungsrate, Reichweite, Frequenz, Kanäle usw. bekannt. Zu diesen zählen beispielhaft, aber nicht ausschließlich, Z-Wave, batterielose Funksensorik von EnOcean, Zigbee, Bluetooth, WiFi (802.11a, 802.11b, etc.), WUSB (wireless USB), WHDI (SRI) sowie WiHD (wireless HDMI) sowie proprietäre Lösungen. Im Bereich der Medizintechnik haben sich besipielsweise bestimmte Funkstandards, darunter vor allem Bluetooth, Zigbee und WiFi etabliert.

"Bluetooth" wird allgemein in "Classic" und "Low Energy" unterteilt. "Classic" bezieht sich auf die ursprünglichen Protokolle Bluetooth 3.0, Bluetooth 2.1 ..., deren Module bzw. Chips auch als Classic-Modul bezeichnet werden. Seit Bluetooth 4.0 gibt es auch die Möglichkeit von "Low Energy" (zusätzlicher Protokollstapel zu "Classic"), mit dem auf kostengünstige Weise eine energiesparende Betriebsweise aufgrund eines schnellen Verbindungsaufbaus möglich ist. Entsprechende Bluetooth-Low-Energy-Module erzielen jedoch nur eine geringere Datenübertragungsrate und einen geringeren Datendurchsatz. Auf dem Markt befindliche Bluetooth-4.0-Module basieren auf alleine dem Classic-Protokoll oder alleine auf dem Low-Energy-Protokoll, sogenannte Single-Mode-Module, sowie auf beiden Protokollen, sogenannte Dual-Mode-Module, bei denen zwischen dem Classic-Modus und dem Low-Energy-Modus gewechselt werden kann. Aber auch ein derartiges Dual-Mode-Modul weist im aktivierten Zustand vor dem Aufbau einer Verbindung einen höheren Energieverbrauch als das Single-Mode-Modul auf, da sich der Energieverbrauch vordem Aufbau einer Verbindung nach dem Classic-Modus richtet.

Gemäß dem Bluetooth-Protokoll gibt es beispielsweise einen "Discoverable"-Modus, in dem das Modul nach anderen Bluetooth-Modulen sucht und für Anfragen von anderen Bluetooth-Modulen empfänglich ist. Weiterhin gibt es einen "Connectable"-Modus, in dem das Modul, wenn es mit seiner Adresse angesprochen wird, bereit zum Eingehen einer Verbindung ist, aber selbst für andere Module nicht erkennbar ist.

Ein Low-Energy-Modul weist die spezielle Eigenschaft auf, dass es gleichzeitig nur eine Verbindung mit einem anderen (Low-Energy-) Modul aufnehmen und aufrechthalten kann.

Es gibt etliche orthopädische Geräte, die über eine Batterie oder über einen Akkumulator mit Spannung versorgt werden und eine Kommunikation per Funk durchführen.

Außerdem ist ein orthopädisches Navigationssystem bekannt, das dem Arzt als intelligentes Werkzeug bei gelenkchirurgischen Eingriffen zum Beispiel zur patientenindividuellen Positionierung von Implantaten im Bereich der Endoprothetik dient. Dabei wird intraoperativ mit Hilfe eines videooptischen Kamerasystems die Position von Infrarotlichtquellen (passive, Infrarotlicht reflektierende Sender), die beispielsweise am Körper des Patienten angebracht sind, im Raum erfasst. Es kann die Lage und Position der Infrarotlicht reflektierenden Sender zueinander und ebenfalls die Lage und Position der chirurgischen Instrumente relativ zum Patienten berechnet werden. Die gemessenen Werte werden mit weiteren Daten (zum Beispiel präoperative Planungsdaten) verrechnet und unterstützen bei der Platzierung und Positionierung des Implantats. Außerdem können die einzelnen Implantatkomponenten zueinander abgestimmt werden, um durch optimales Ausrichten die Haltbarkeit und Funktion der Implantate sicherzustellen.

Wenn jedoch beispielsweise während eines chirurgischen Eingriffs die Kamera mit dem Rechen- und Anzeigegerät drahtlos mittels Funk kommunizieren soll, wird häufig ein höherer Datendurchsatz (und höhere Datenrate) je Funkstrecke benötigt, der zum Beispiel 500 kbit/s überschreitet. Somit müssen Funktechniken eingesetzt werden, die gewöhnlich nicht nur eine höhere Datenrate bieten, sondern dann auch einen höheren Stromverbrauch haben. Der Stromverbrauch während des Betriebs stellt jedoch nicht unbedingt das größte Problem dar, sondern der Standby-Strom, während ein Gerät bzw. das entsprechende Funkmodul in Bereitschaft zur Eingehung einer Verbindung steht bzw. auf eine Verbindungsanfrage wartet. Dieses beeinflusst die Laufzeit der batterie- oder Akkumulatorbetriebenen Geräte erheblich, wenn diese jederzeit zum Eingehen einer Verbindung bereit sein sollen.

US2011210830 offenbart ein Bluetooth-Gerät, das aus Sicherheitsgründen normalerweise in einem Stanby-Modus bleibt und das NFC-Tag zum Einleiten des Paarungsprozesses enthält, wenn ein anderes Gerät in unmittelbare physische Nähe gebracht wird. Das NFC-Tag überträgt die Daten (öffentlicher Schlüssel, Bluetooth-Adresse und eine ID-Nummer, die für die Gerätekopplung erforderlich sind). Wenn das empfangene Zertifikat übereinstimmt, wechselt das Bluetooth-Gerät in den Empfangs-Modus. Wenn nicht, bleibt es im Standby-Modus

Aufgabe der vorliegenden Erfindung ist es, eine Datenkommunikationsvorrichtung und ein Verfahren zur Datenkommunikation zu schaffen, die eine hohe Sicherheit gegenüber beispielsweise Angriffen per DoS aufweisen und eine hohe Datenübertragungsrate bieten.

Die Aufgabe wird mit den Merkmalen der unabhängigen Ansprüche gelöst. Die abhängigen Ansprüche sind auf bevorzugte Ausführungsformen der Erfindung gerichtet.

Erfindungsgemäß wird eine Datenkommunikationsvorrichtung nach Anspruch 1 geschaffen.

Vorzugsweise ist das erste Funk-Kommunikationsmodul ein Bluetooth-Kommunikationsmodul, beispielsweise ein Bluetooth-Classic-Modul oder ein Bluetooth-Dual-Mode-Modul.

Weiter vorzugsweise ist das zweite Funk-Kommunikationsmodul ein Bluetooth-Kommunikationsmodul, beispielsweise ein Bluetooth-Low-Energy-Modul (BLE-Modul), weiter beispielsweise ein Bluetooth-Single-Mode-Low-Energy-Modul.

Wenn das erste und/oder zweite Funk-Kommunikationsmodul ein Bluetooth-Kommunikationsmodul ist, kann dementsprechend die externe Funk-Vorrichtung ebenfalls ein entsprechendes Bluetooth-Kommunikationsmodul zur Bluetooth-Kommunikation mit dem ersten/zweiten Funk-Kommunikationsmodul aufweisen.

Das zweite Funk-Kommunikationsmodul kann beispielsweise gleichzeitig nur eine Kommunikationsverbindung mit einer externen Funk-Vorrichtung eingehen. Dadurch können andere Funk-Vorrichtungen den Funk-Verkehr mit dem zweiten Funk-Kommunikationsmodul als auch mit dem ersten Funk-Kommunikationsmodul nicht stören. Die anderen Funk-Vorrichtungen erfahren somit die Identifikationsdaten des ersten Funk-Kommunikationsmoduls nicht und können somit nicht mit dem ersten Funk-Kommunikationsmodul kommunizieren, da auch das erste Funk-Kommunikationsmodul sich nicht zu erkennen gibt.

Das erste Funk-Kommunikationsmodul kann bei Beendigung des Datenaustausches ebenfalls in einen inaktiven Zustand oder wieder in den Empfangs-Modus übergehen.

Das erste Funk-Kommunikationsmodul kann beispielsweise eine höhere Datenübertragungsrate und/oder einen höheren Datendurchsatz und im Standby-Modus einen höheren Energieverbrauch als das zweite Funk-Kommunikationsmodul aufweisen. Der Standby-Modus bezieht sich dabei vorzugsweise auf einen Zustand der Bereitschaft zum Eingehen einer Funkverbindung. Es ist aber auch ausreichend, wenn das erste Funk-Kommunikationsmodul eine höhere Datenübertragungsrate und/oder einen höheren Datendurchsatz als das zweite Funk-Kommunikationsmodul aufweist, ohne dass die Höhe des Energieverbrauchs im Vergleich der beiden Funk-Kommunikationsmodule eine Rolle spielt.

Die Datenübertragungsrate des ersten Funk-Kommunikationsmoduls beträgt beispielsweise mindestens 200 kbit/s, weiter vorzugsweise mindestens 250 kbit/s. Weiter vorzugsweise beträgt die Datenübertragungsrate des ersten Funk-Kommunikationsmoduls mehr als ein 1 Mbit/s. Noch weiter vorzugsweise beträgt die Übertragungsrate des ersten Funk-Kommunikationsmoduls mehr als 1,5 Mbit/s. Der Datendurchsatz des ersten Funk-Kommunikationsmoduls beträgt beispielsweise mindestens 100 kbit/s. Der Energieverbrauch des zweiten Funk-Kommunikationsmoduls beträgt im Standby-Modus beispielsweise weniger als 20 µA.

Es kann eine Spannungsversorgungseinheit zwischen den Versorgungsspannungseingang und die Einschalteinheit geschaltet sein, und die Spannungsversorgungseinheit kann einen ladbaren Akkumulator aufweisen.

Stattdessen kann die Datenkommunikationsvorrichtung eine Batterie aufweisen, die der Einschalteinheit eine Batteriespannung zuführt, die zur Spannungsversorgung des zweiten Funk-Kommunikationsmoduls dient, wobei die Einschalteinheit eine Spannungsschalteinheit aufweisen kann, die jeweils mit dem zweiten Funk-Kommunikationsmodul und dem Versorgungsspannungseingang gekoppelt ist und der Rechen- und Dateneinheit die Versorgungsspannung über den Spannungsausgang auf den Empfang eines entsprechenden Signals von dem zweiten Funk-Kommunikationsmodul hin zuführt und die Zufuhr der Versorgungsspannung auf ein entsprechendes Signal von dem zweiten Funk-Kommunikationsmodul hin unterbricht.

Die Rechen- und Dateneinheit kann eine Kamera aufweisen, die Bilddaten aufnimmt, und die Bilddaten können in unverarbeiteter oder in mittels der Rechen- und Dateneinheit verarbeiteter Form über das erste Funk-Kommunikationsmodul an die externe Funk-Vorrichtung übertragen werden. Die Kamera kann beispielsweise eine in der Orthopädie, insbesondere eine Kamera eines orthopädischen Navigationssystems und weiter insbesondere als zur Verwendung während eines operativen Eingriffes ausgelegt sein. Diese Kamera kann Infrarotlicht aussenden und das von entsprechenden reflektierenden Sendern reflektierte Licht erfassen und in Signale zur Weiterleitung an beispielsweise die Rechen- und Dateneinheit umwandeln bzw. verarbeiten. Es können jedoch auch andere Lichtstrahlen von der Kamera aufgenommen werden und zur weiteren Verarbeitung und Anzeige an die Rechen- und Dateneinheit weitergeleitet werden. Die Bilddaten beziehen sich somit auf Signale beliebiger Form, die von der Kamera erfasst bzw. aufgenommen werden können und in unverarbeiteter oder verarbeiteter Form mittels Funk an die externe Funk-Vorrichtung übermittelt werden können.

Das zweite Funk-Kommunikationsmodul kann, wenn der Datenaustausch beendet ist, bewirken, dass die Einschalteinheit die Zufuhr der Versorgungsspannung über den Spannungsausgang zu der Rechen- und Dateneinheit unterbricht.

Weiterhin können die Einschalteinheit und die Rechen- und Dateneinheit über eine Signalleitung miteinander verbunden sein, über die das zweite Funk-Kommunikationsmodul ein Einschaltsignal an die Rechen- und Dateneinheit zum Aktivieren der Rechen- und Dateneinheit nach dem Verstreichen einer vorbestimmten ersten Zeitdauer nach dem Zuführen der Versorgungsspannung von der Einschalteinheit zu der Rechen- und Dateneinheit sendet. Damit kann sichergestellt werden, dass die Rechen- und Dateneinheit das Einschaltsignal empfangen und verarbeiten kann.

Weiterhin kann das zweite Funk-Kommunikationsmodul über die Signalleitung ein Ausschaltsignal an die Rechen- und Dateneinheit zum Deaktivieren der Rechen- und Dateneinheit senden, bevor die Einschalteinheit nach dem Verstreichen einer vorbestimmten zweiten Zeitdauer die Zufuhr der Versorgungsspannung über den Spannungsausgang zu der Rechen- und Dateneinheit unterbricht. Damit kann die Rechen- und Dateneinheit sicher heruntergefahren werden, bevor endgültig die Stromzufuhr unterbrochen wird.

Die Daten- und Recheneinheit kann über eine weitere Signalleitung mit der Einschalteinheit verbunden sein, über die die Rechen- und Dateneinheit einen Systemstatus an die Einschalteinheit liefern kann. Dieser Systemstatus kann eine Beendigung des Datenaustausches zwischen dem ersten Funk-Kommunikationsmodul bzw. der Daten- und Recheneinheit und der externen Funk-Vorrichtung sein. Bei Empfang des Systemstatus kann das zweite Funk-Kommunikationsmodul die Verbindung mit der externen Funk-Vorrichtung unterbrechen und in den Standby-Modus übergehen. Außerdem kann dann das zweite Funk-Kommunikationsmodul ein Herunterfahren der Rechen- und Dateneinheit und/oder eine Unterbrechung der Zufuhr der Versorgungsspannung zu der Rechen- und Dateneinheit veranlassen.

Die Beendigung des Datenaustausches kann dem zweiten Funk-Kommunikationsmodul aber auch oder stattdessen mittels Funk von dem ersten Funk-Kommunikationsmodul mitgeteilt werden.

Erfindungsgemäß wird weiterhin ein Verfahren zur Datenkommunikation nach Anspruch 8 geschaffen.

Das erste Funk-Kommunikationsmodul kann mittels Bluetooth, beispielsweise eines Bluetooth-Classic-Protokolls, kommunizieren.

Das zweite Funk-Kommunikationsmodul kann mittels Bluetooth, beispielsweise eines Bluetooth-Low-Energy-Protokolls kommunizieren.

Das erste Funk-Kommunikationsmodul weist beispielsweise eine höhere Datenübertragungsrate und/oder einen höheren Datendurchsatz und im Standby-Modus einen höheren Energieverbrauch als das zweite Funk-Kommunikationsmodul auf. Diesbezüglich wird auf die oben genannten Zahlen hinsichtlich der Datenübertragungsrate, des Datendurchsatzes und des Energieverbrauches verwiesen.

Das zweite Funk-Kommunikationsmodul kann beispielsweise gleichzeitig nur eine Kommunikationsverbindung mit einer externen Funk-Vorrichtung eingehen.

Das zweite Funk-Kommunikationsmodul kann beispielsweise gleichzeitig nur eine Kommunikationsverbindung mit einer externen Funk-Vorrichtung eingehen.

Der Einschalteinheit kann von einer Spannungsversorgungseinheit eine Eingangsspannung zugeführt werden, und die Spannungsversorgungseinheit kann einen ladbaren Akkumulator aufweisen.

Wenn der Datenaustausch beendet ist, kann beispielsweise mittels des zweiten Funk-Kommunikationsmoduls bewirkt werden, dass die Einschalteinheit die Zufuhr der Versorgungsspannung zu der Rechen- und Dateneinheit unterbricht.

Es kann ein Einschaltsignal von dem zweiten Funk-Kommunikationsmodul an die Rechen- und Dateneinheit zum Aktivieren der Rechen- und Dateneinheit nach dem

Verstreichen einer vorbestimmten ersten Zeitdauer nach dem Zuführen der Versorgungsspannung von der Einschalteinheit zu der Rechen- und Dateneinheit gesendet werden.

Weiterhin kann ein Ausschaltsignal von dem zweiten Funk-Kommunikationsmodul an die Rechen- und Dateneinheit zum Deaktivieren der Rechen- und Dateneinheit gesendet werden, bevor nach dem Verstreichen einer vorbestimmten zweiten Zeitdauer die Zufuhr der Versorgungsspannung von der Einschalteinheit zu der Rechen- und Dateneinheit unterbrochen wird.

Im Folgenden werden bevorzugte Ausführungsformen der vorliegenden Erfindung mit Bezug auf die zugehörigen Zeichnungen beschrieben. Es zeigen:
Figur 1 ein Blockdiagramm einer Datenkommunikationsvorrichtung gemäß einer Ausführungsform der vorliegenden Erfindung;
Figur 2 ein Blockdiagramm einer Datenkommunikationsvorrichtung gemäß einer weiteren Ausführungsform der vorliegenden Erfindung;
Figur 3 ein Blockdiagramm einer Einschalteinheit gemäß der vorliegenden Erfindung;
Figur 4 ein Blockschaltbild einer Datenkommunikationsvorrichtung gemäß einer noch weiteren Ausführungsform der vorliegenden Erfindung; und
Figur 5 eine Einschalteinheit gemäß der vorliegenden Erfindung, die in der Datenkommunikationsvorrichtung der Figur 4 verwendet werden kann.

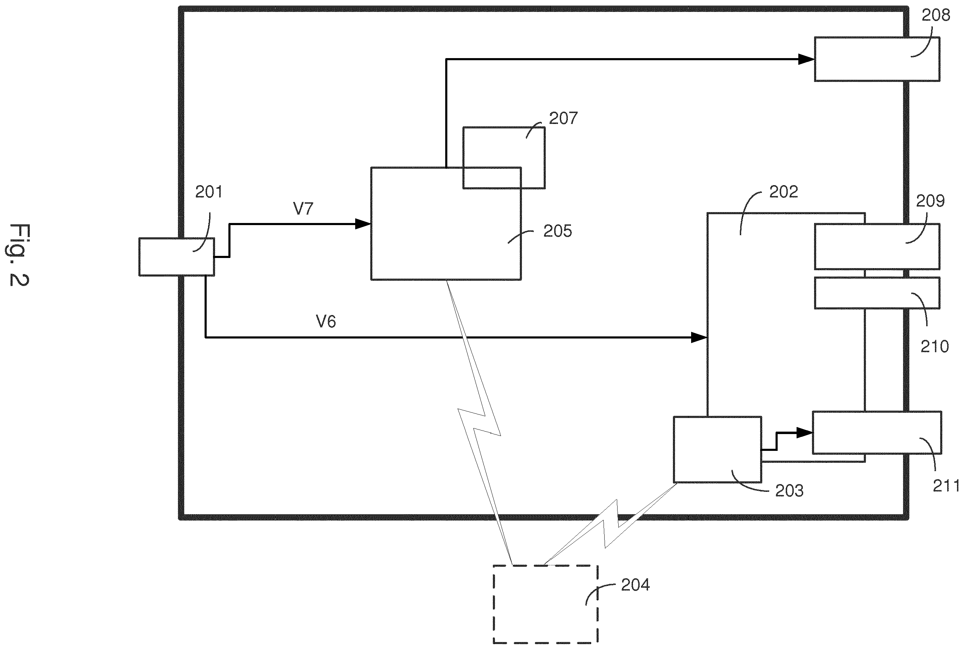

Figur 2 zeigt ein Blockschaltbild einer bevorzugten Datenkommunikationsvorrichtung gemäß einer Ausführungsform der vorliegenden Erfindung. Über einen Versorgungsspannungseingang (beispielsweise Spannungsbuchse) 201 wird einer Rechen- und Dateneinheit 202 eine Versorgungsspannung V6 zugeführt.

Die Rechen- und Dateneinheit 202 ist beispielsweise eine Navigationskamera mit entsprechender Elektronik eines orthopädischen Navigationssystems. Die Rechen- und Dateneinheit 102 ist mit einem ersten Funk-Kommunikationsmodul 203 verbunden oder weist dieses Modul 203 auf. Das erste Funk-Kommunikationsmodul 203 ist beispielsweise ein Bluetooth-Classic-Modul wie oben definiert. Das erste Funk-Kommunikationsmodul 203 kommuniziert mittels Funk (drahtlos) mit einer externen Funk-Vorrichtung 204, die beispielsweise eine Rechen- und Anzeigeeinheit für die Kameradaten in dem orthopädischen Navigationssystem ist. Diese Rechen- und Anzeigeeinheit kann ein normaler PC mit einem eingebauten oder separaten Monitor sein, kann ein Tablet-PC, oder ein beliebiges anderes Gerät sein, das zumindest entsprechende Kameradaten verarbeiten und/oder anzeigen kann. Die externe Funk-Vorrichtung 204 kann jedoch eine beliebige Vorrichtung sein, die mittels Funk mit dem ersten Funk-Kommunikationsmodul 203 kommuniziert. Dieses kann beispielsweise auch ein anderes orthopädisches Gerät sein.

Außerdem kann der Datenaustausch zwischen dem ersten Funk-Kommunikationsmodul 203 und der externen Funk-Vorrichtung 204 bidirektional sein, oder es können auch nur Daten beispielsweise der Kamera zur weiteren Verarbeitung an die externe Funk-Vorrichtung 204 übermittelt werden. Dieses betrifft jedoch nicht den ggf. notwendigen bidirektionalen Austausch von Daten oder Signalen zum Aufbau einer Verbindung zwischen diesen beiden Vorrichtungen.

Außerdem wird einem zweiten Funk-Kommunikationsmodul 205 über den Versorgungsspannungseingang 201 eine Versorgungsspannung V7 zugeführt, die in Abhängigkeit von den Anforderungen der Rechen- und Dateneinheit 202 und des zweiten Funk-Kommunikationsmoduls (205) dieselbe wie die Versorgungsspannung V6 sein kann oder sich von dieser unterscheidet. Das zweite Funk-Kommunikationsmodul 205 ist beispielsweise ein Bluetooth-Low-Energy-Modul wie oben definiert. Das zweite Funk-Kommunikationsmodul enthält einen Speicher 207, der unter anderem und insbesondere zum Speichern von Identifikationsdaten (z.B. Adresse) des ersten Funk-Kommunikationsmoduls 203 vorgesehen ist. Der Speicher kann in dem zweiten Funk-Kommunikationsmodul 205 enthalten oder separat kommunizierbar mit diesem verbunden sein. Der Speicher 207 kann beispielsweise ein EEPROM sein. Der Speicher 207 kann beispielsweise nach Bedarf weitere Daten speichern.

Das zweite Funk-Kommunikationsmodul 205 kommuniziert mit der externen Funk-Vorrichtung 204 mittels Funk (drahtlos) und sendet an diese beispielsweise die in dem Speicher 207 gespeicherten Identifikationsdaten, die die externe Funk-Vorrichtung 204 benötigt, um das erste Funk-Kommunikationsmodul 203 direkt ansprechen bzw. adressieren zu können, um mit diesem eine Kommunikationsverbindung aufzubauen.

Das erste Funk-Kommunikationsmodul 205 ist optional mit einer ersten Anzeige 208, beispielsweise einer Licht emittierenden Diode (LED), verbunden, die einen Status des ersten Funk-Kommunikationsmoduls, beispielsweise den Verbindungszustand, anzeigt. Die Rechen- und Dateneinheit 202 ist weiterhin optional mit einer zweiten Anzeige 209 (beispielsweise LED) und dritten Anzeige 210 (beispielsweise LED) verbunden, wobei die zweite Anzeige 209 beispielsweise anzeigt, ob der Rechen- und Dateneinheit 202 die Versorgungsspannung V6 zugeführt wird, und wobei die dritte Anzeige 210 beispielsweise anzeigt, ob ein Fehler in der Rechen- und Dateneinheit 202 aufgetreten ist. Außerdem ist das erste Funk-Kommunikationsmodul 203 optional mit einer vierten Anzeige 211 (beispielsweise LED) verbunden, die beispielsweise den Verbindungszustand der Verbindung mit der externen Funk-Vorrichtung 104 anzeigt.

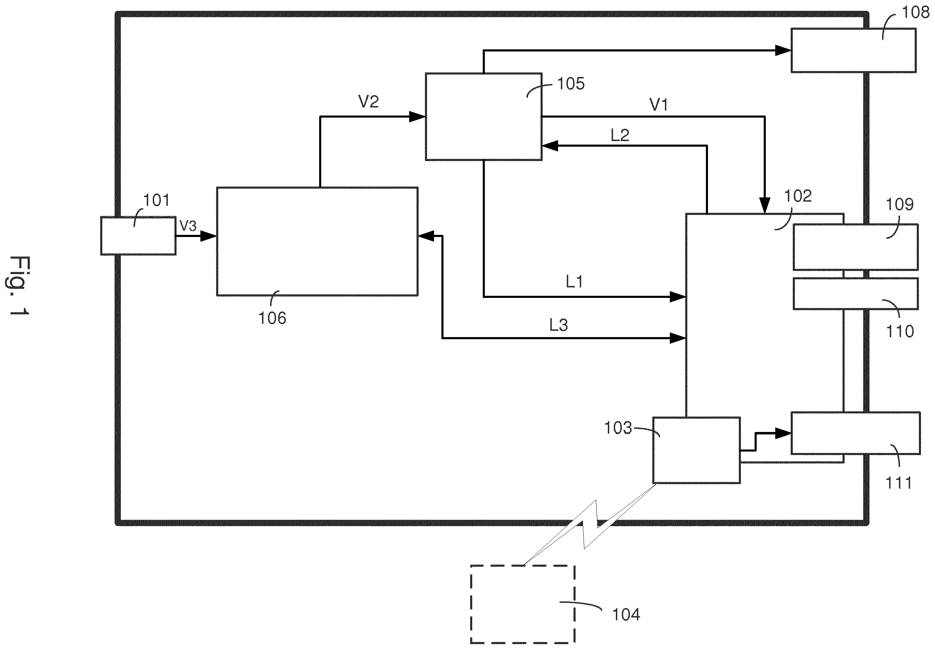

Figur 1 zeigt ein Blockschaltbild einer Datenkommunikationsvorrichtung gemäß einer weiteren Ausführungsform der vorliegenden Erfindung. Über einen Versorgungsspannungseingang (beispielsweise Spannungsbuchse) 101 wird einer Spannungsversorgungseinheit 106 eine Spannung V3 zugeführt. Die Spannungsversorgungseinheit 106 kann einen Akkumulator enthalten, der beispielsweise über den Versorgungsspannungseingang 101 von extern bzw. außerhalb der Datenkommunikationsvorrichtung ladbar ist. Der die Spannungsversorgungseinheit 106 gibt eine Spannung V2 an eine Einschalteinheit 105 aus. Die Einschalteinheit 105 gibt wiederum eine Versorgungsspannung V1 an eine Rechen- und Dateneinheit 102 aus. Außerdem ist die Einschalteinheit 105 über eine Signalleitung L1 mit der Rechen- und Dateneinheit 102 verbunden, über die die Einschalteinheit 105 beispielsweise ein Ein- und Ausschaltsignal an die Rechen- und Dateneinheit 102 zum Ein- und Ausschalten der Rechen- und Dateneinheit 102 ausgibt. Die Rechen- und Dateneinheit 102 kann wiederum über eine weitere Signalleitung L2 einen Systemstatus an die Einschalteinheit 105 liefern, der beispielsweise den eingeschalteten oder ausgeschalteten Zustand der Rechen- und Dateneinheit 102 angibt. Schließlich ist die Einschalteinheit 105 optional mit einer ersten Anzeige 108, beispielsweise einer Licht emittierenden Diode (LED) verbunden, die beispielsweise den Verbindungszustand eines in der Einschalteinheit 105 enthaltenen zweiten Funk-Kommikationsmoduls 301 anzeigt.

Die Rechen- und Dateneinheit 102 ist mit der Spannungsversorgungseinheit 106 über eine weitere Signalleitung L3 verbunden, über die die Spannungsversorgungseinheit 106 beispielsweise einen Ladungszustand des Akkumulators 107 an die Rechen- und Dateneinheit 102 ausgibt, und über die beispielsweise die Rechen- und Dateneinheit 102 Signale, beispielsweise Steuersignale, an die Spannungsversorgungseinheit 106 ausgibt. Die Rechen- und Dateneinheit 102 ist weiterhin optional mit einer zweiten Anzeige 109 (beispielsweise LED) und dritten Anzeige 110 (LED) verbunden, wobei die zweite Anzeige 109 beispielsweise anzeigt, ob der Rechen- und Dateneinheit 102 die Versorgungsspannung V1 zugeführt wird, und wobei die dritte Anzeige 110 beispielsweise anzeigt, ob ein Fehler in der Rechen- und Dateneinheit 102 aufgetreten ist.

Die Rechen- und Dateneinheit 102 ist beispielsweise eine Navigationskamera mit entsprechender Elektronik eines orthopädischen Navigationssystems. Die Rechen- und Dateneinheit 102 ist wiederum mit einem ersten Funk-Kommunikationsmodul 103 verbunden oder weist dieses Modul 103 auf. Das erste Funk-Kommunikationsmodul 103 ist beispielsweise ein Bluetooth-Classic-Modul wie oben definiert. Das erste Funk-Kommunikationsmodul 103 kommuniziert mittels Funk (drahtlos) mit einer externen Funk-Vorrichtung 104, die beispielsweise eine Rechen- und Anzeigeeinheit für die Kameradaten in dem orthopädischen Navigationssystem ist. Diese Rechen- und Anzeigeeinheit kann ein normaler PC mit einem eingebauten oder separaten Monitor sein, kann ein Tablet-PC, oder ein beliebiges anderes Gerät sein, das zumindest entsprechende Kameradaten verarbeiten und/oder anzeigen kann. Die externe Funk-Vorrichtung 104 kann jedoch eine beliebige Vorrichtung sein, die mittels Funk mit dem ersten Funk-Kommunikationsmodul 103 kommuniziert. Dieses kann beispielsweise auch ein anderes orthopädisches Gerät sein.

Außerdem kann der Datenaustausch zwischen dem ersten Funk-Kommunikationsmodul 103 und der externen Funk-Vorrichtung 104 bidirektional sein, oder es können auch nur Daten beispielsweise der Kamera zur weiteren Verarbeitung an die externe Funk-Vorrichtung 104 übermittelt werden. Dieses betrifft jedoch nicht den ggf. notwendigen bidirektionalen Austausch von Daten oder Signalen zum Aufbau einer Verbindung zwischen diesen beiden Vorrichtungen.

Das erste Funk-Kommunikationsmodul 103 ist weiterhin optional mit einer vierten Anzeige 111 (beispielsweise LED) verbunden, die beispielsweise den Verbindungszustand der Verbindung mit der externen Funk-Vorrichtung 104 anzeigt.

Die Spannungsversorgungseinheit 106 kann nicht nur wie oben erwähnt einen Ackumulator, sondern auch eine Ladeeinrichtung (Ladeelektronik) aufweisen. Der Ladeeinrichtung kann die Spannung V3 über den Versorgungsspannungseingang 101 zugeführt werden. Die Ladeeinrichtung 212 kann nach Bedarf den Akkumulator mittels der gelieferten Spannung V3 laden und die Spannung V2 an die Einschalteinheit 105 ausgeben.

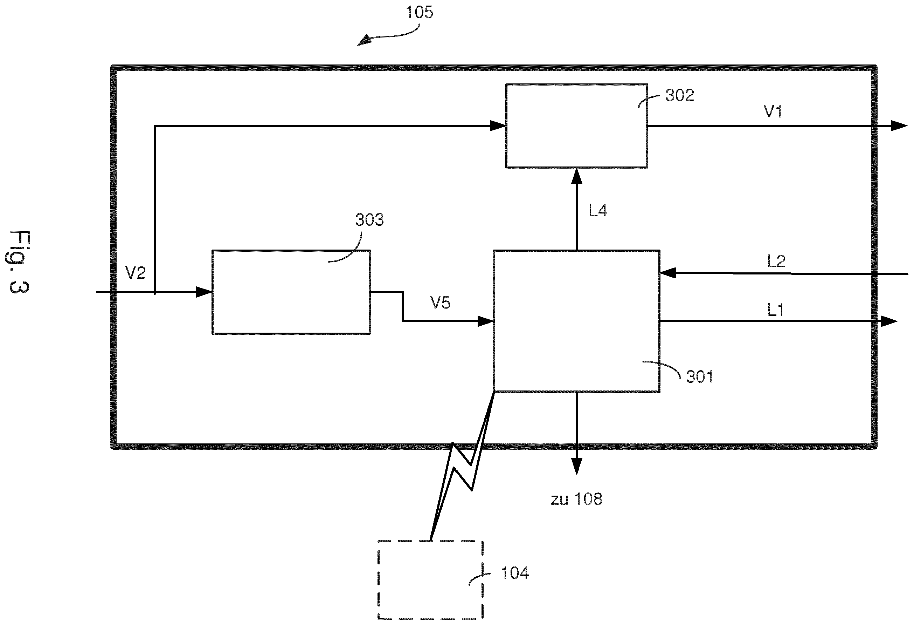

Figur 3 zeigt eine erfindungsgemäße Einschalteinheit 105, die ein zweites Funk-Kommunikationsmodul 301 und einen Speicher (in der Figur nicht gezeigt) zum Speichern der Identifikationsdaten des ersten Funk-Kommunikationsmoduls 103 enthält und die beispielsweise in der Datenkommunikationsvorrichtung der Figur 1 verwendet wird. Die Spannung V2 von der Spannungsversorgungseinheit 106, wird zum einen einer Spannungsschalteinheit 302 und ggf. zum anderen einem optionalen Spannungswandler 303 zugeführt. Die Spannungsschalteinheit 302 gibt die Versorgungsspannung V1 an die Rechen- und Dateneinheit 102 aus. Der Spannungswandler 303 gibt eine Spannung V5 an das zweite Funk-Kommunikationsmodul 301 aus. Wenn die Spannung V2 bereits einer für das zweite Funk-Kommunikationsmodul 301 passenden Spannung entspricht, wird der Spannungswandler 303 nicht benötigt, sodass die Spannung V2 (gleich V5) ohne zwischengeschalteten Spannungswandler dem zweiten Funk-Kommunikationsmodul 301 zugeführt wird.

Das zweite Funk-Kommunikationsmodul 301 ist beispielsweise ein Bluetooth-Low-Energy-Modul wie oben beschrieben. Das zweite Funk-Kommunikationsmodul 301 ist über eine Signalleitung L4 mit der Spannungsschalteinheit 302 verbunden, um an diese ein Signal auszugeben, das angibt, ob die Spannungsschalteinheit 302 die Versorgungsspannung V1 der Rechen- und Dateneinheit 102 zuführen soll oder ob die Zufuhr der Versorgungsspannung V1 zu unterbrechen ist. Dementsprechend gibt die Spannungsschalteinheit 302 die Versorgungsspannung V1 nur an die Rechen- und Dateneinheit 102 aus, wenn das entsprechende Signal über die Signalleitung L4 dieses anweist. Nach Bedarf weist die Spannungsschalteinheit 302 einen Spannungswandler auf, der die der Spannungsschalteinheit 302 zugeführte Spannung V2 in eine für die Rechen- und Dateneinheit 102 geeignete Versorgungsspannung V1 umwandelt.

Das zweite Funk-Kommunikationsmodul 301 kommuniziert mit der externen Funk-Vorrichtung 104 mittels Funk (drahtlos) und sendet an diese beispielsweise die in dem Speicher 207 gespeicherten Identifikationsdaten, die die externe Funk-Vorrichtung 104 benötigt, um das erste Funk-Kommunikationsmodul 103 direkt ansprechen bzw. adressieren zu können, um mit diesem eine Kommunikationsverbindung aufzubauen.

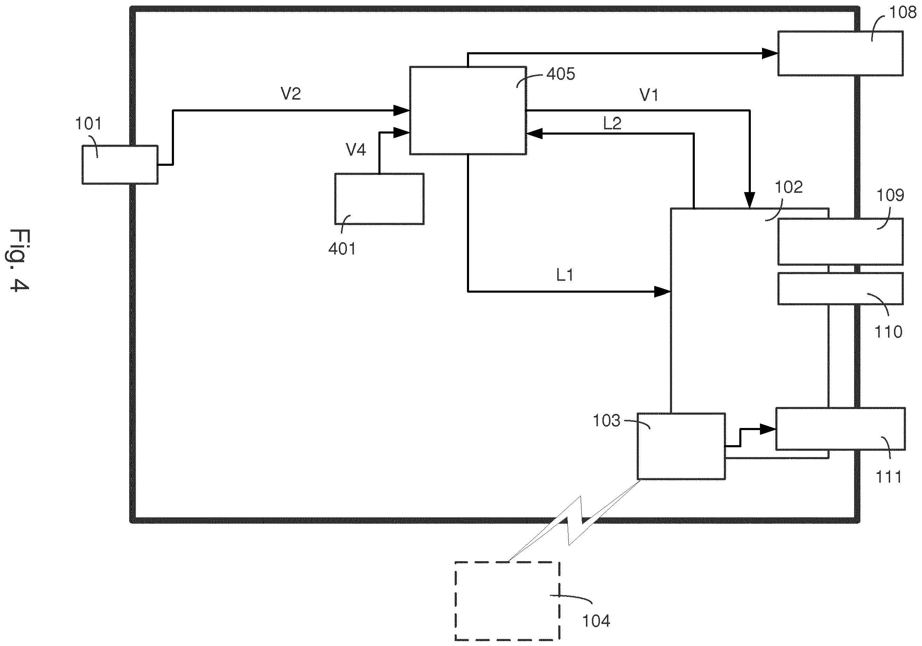

Figur 4 zeigt eine weitere Ausführungsform einer Datenkommunikationsvorrichtung gemäß der vorliegenden Erfindung. Es werden dieselben Bezugszeichen für dieselben oder vergleichbare Elemente wie in Figur 1 verwendet. Die Spannung V2 wird von dem Versorgungsspannungseingang 101 einer Einschalteinheit 405 zugeführt, die, auch wenn es in der Figur nicht gezeigt ist, ein zweites Funk-Kommunikationsmodul mit einem Speicher enthält. Außerdem führt eine Batterie 401 der Einschalteinheit 405 eine Spannung V4 zu.

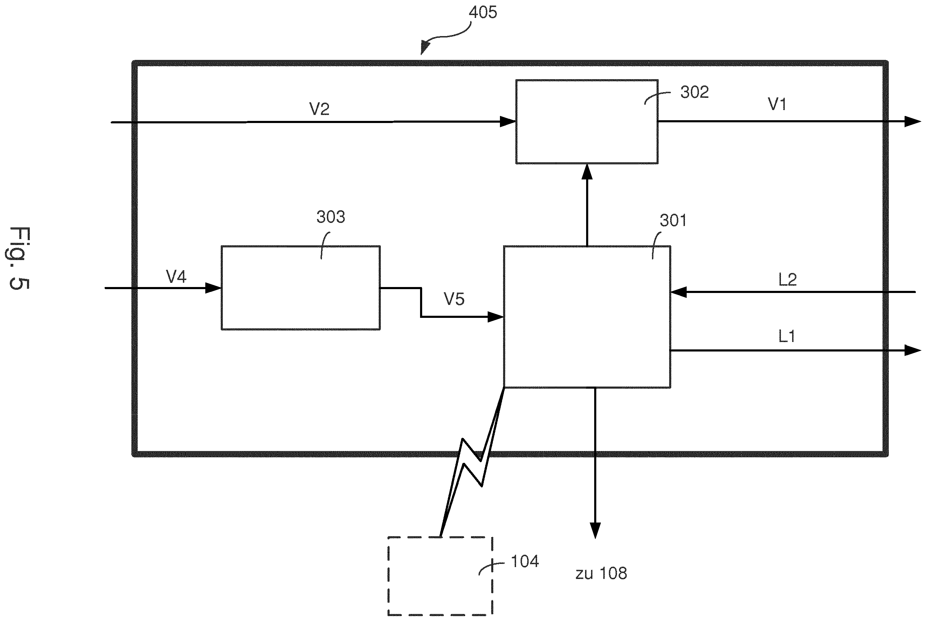

Figur 5 zeigt die Einschalteinheit 405, die in der Datenkommunikationsvorrichtung der Figur 4 verwendet werden kann. Hier wird die Batteriespannung V4 von der Batterie 401 dem Spannungswandler 303 zugeführt, der die Spannung V5 dem zweiten Funk-Kommunikationsmodul 301 zuführt. Die Spannung V2 von dem Versorgungsspannungseingang 101 wird hingegen der Spannungsschalteinheit 302 zugeführt, die wiederum die Versorgungsspannung V1 ausgibt. Hier ist die Batterie 401 für die Spannungsversorgung des zweiten Funk-Kommunikationsmoduls 301 (beispielsweise BLE-Modul) zuständig, das nur einen geringen Energieverbrauch aufweist, so dass die von der Batterie 401 gelieferte Energie ausreichend ist. In diesem Fall wird die Spannung V2 über den Versorgungsspannungseingang 101 geliefert, der im Betrieb der Datenkommunikationsvorrichtung mit einer externen Spannungsquelle verbunden ist. Diese externe Spannungsquelle kann auch ein Akkumulator oder eine Batterie sein.

Im Folgenden wird ein Betrieb der erfindungsgemäßen Datenkommunikationsvorrichtung beispielhaft beschrieben. Das erste Funk-Kommunikationsmodul 103, 203 wird, ggf. nach seiner Aktivierung durch eine Spannungsversorgung, in einem Empfangs-Modus betrieben, in dem es für die externe Funk-vorrichtung 104, 204 nicht erkennbar ist, aber beim Empfang von seinen Identikationsdaten von der externen Funk-Vorrichtung 104, 204 bereit zum Aufbau einer Verbindung mit dieser ist. Das zweite Funk-Kommunikationsmodul 205, 301 wird hingegen im Standby-Modus bzw. Bereitschafts-Modus betrieben, in dem es beispielsweise selbst in vorbestimmten Abständen ein Signal abgibt, das angibt, dass es sich in Betrieb befindet, und in dem es auf andere Geräte lauscht, ob diese eine Verbindung bzw. eine Kommunikation mit dem zweiten Funk-Kommunikationsmodul 205, 301 eingehen wollen.

Zu Beginn gibt dann die externe Funk-Vorrichtung 104, 204, die das Bereit-Signal von dem zweiten Funk-Kommunikationsmodul 301 empfängt und dieses zur Kommunikation auswählt, ein entsprechendes Signal an das zweite Funk-Kommunikationsmodul 301 aus, um eine Verbindung mit diesem aufzubauen. Es kann jedoch auch andersherum das zweite Funk-Kommunikationsmodul 205, 301, das ein Bereit-Signal von der externen Funk-Vorrichtung 104, 204 empfängt und dieses zur Kommunikation auswählt, ein entsprechendes Signal an die externe Funk-Vorrichtung 104, 204 ausgeben, um eine Verbindung mit diesem aufzubauen. Die externe Funk-Vorrichtung 104, 204 und das zweite Funk-Kommunikationsmodul 205, 301 gehen dann, ggf. nach einer vorher durchgeführten Autorisierung, eine Kommunikationsverbindung miteinander ein.

Danach liest das zweite Funk-Kommunikationsmodul 104, 204, ggf. nach Aufforderung durch die externe Funk-Vorrichtung 104, 204, die Identifikationsdaten des ersten Funk-Kommunikationsmoduls 103, 203 aus dem Speicher 207 aus und sendet diese an die externe Funk-Vorrichtung 104, 204. Die externe Funk-Vorrichtung 104, 204 kann danach das erste Funk-Kommunikationsmodul 103, 203 direkt unter Verwendung der Identifikationsdaten (beispielsweise Adresse) ansprechen bzw. adressieren, um eine Kommunikationsverbindung mit dem ersten Funk-Kommunikationsmodul 103, 203 einzugehen und einen Datenaustausch beispielsweise mit einer hohen Datenrate durchzuführen.

Das zweite Funk-Kommunikationsmodul 301 kann alternativ nach dem Aufbau der Kommunikationsverbindung mit der externen Funk-Vorrichtung 104 bewirken, dass die Rechen- und Dateneinheit 102 und ggf. die erste Funk-Kommunikationsvorrichtung 103 aktiviert werden. Dieses erfolgt beispielsweise dadurch, dass der Rechen- und Dateneinheit 102 die Versorgungsspannung V1 von der Einschalteinheit 105, 405 zugeführt wird. Außerdem kann eine endgültige Aktivierung der Rechen- und Dateneinheit 102 dadurch erfolgen, dass das zweite Funk-Kommunikationsmodul 301 ein entsprechendes Einschaltsignal über die Signalleitung L1 an die Rechen- und Dateneinheit 102 ausgibt.

Gleichzeitig wird beispielsweise das erste Funk-Kommunikationsmodul 103 durch die Zufuhr der Spannungsversorgung in den obigen Empfangs-Modus versetzt. Die externe Funk-Vorrichtung 104 kann dann ein entsprechendes Signal unter Verwendung der Identifikationsdaten an das erste Funk-Kommunikationsmodul 103 mit der Anfrage eines Verbindungsaufbaus richten. Die Verbindung wird dann ggf. nach einem entsprechenden Autorisierungsprozess hergestellt, so dass dann der Datenaustausch zwischen dem ersten Funk-Kommunikationsmodul 103 und der externen Funk-Vorrichtung 104 durchgeführt werden kann.

Ist der Datenaustausch beendet, so wird das erste Funk-Kommunikationsmodul 103, 203 beispielsweise von der Rechen- und Dateneinheit 102, 202 in einen inaktiven Zustand oder den Empfangs-Modus versetzt, und das zweite Funk-Kommunikationsmodul 301 geht in den Standby-Modus über. Dieses kann dadurch erfolgen, dass die Rechen- und Dateneinheit 102 ein entsprechendes Signal an das zweite Funk-Kommunikationsmodul 301 über die Signalleitung L2 ausgibt.

Das erste Funk-Kommunikationsmodul 103, 203 kann auch nach Beendigung des Datenaustausches mittels eines entsprechenden Signals von der externen Funk-Vorrichtung 104 deaktiviert oder in den Empfangs-Modus versetzt werden. Das erste Funk-Kommunikationsmodul 103, 203 kann weiterhin nach einer vorbestimmten Zeitdauer, nachdem es kein Signal mehr von der externen Funk-Vorrichtung 104, 204 empfangen hat, in den inaktiven Zustand oder den Empfangs-Modus übergehen. Wenn das erste Funk-Kommunikationsmodul 103 nicht von der Rechen- und Dateneinheit 102 in den inaktiven Zustand oder den Empfangs-Modus versetzt wird, kann jedoch die Rechen- und Dateneinheit 102 den Zustand des ersten Funk-Kommunikationsmoduls 103 überwachen und bei dessen inaktivem Zustand oder dessen Empfangs-Modus das zweite Funk-Kommunikationsmodul 301 in den Standby-Modus versetzen, beispielsweise mittels eines entsprechenden Signals über die Signalleitung L2. Andererseits kann auch die externe Funk-Vorrichtung 104, 204, deren Datenaustausch mit dem ersten Funk-Kommunikationsmodul 103, 203 beendet oder unterbrochen ist oder werden soll, ein entsprechendes Funksignal an das zweite Funk-Kommunikationsmodul 205, 301 senden, das bewirkt, dass das zweite Funk-Kommunikationsmodul 205, 301 in den Standby-Modus übergeht. Eine weitere Möglichkeit besteht darin, dass die externe Funk-Vorrichtung 104 ein entsprechendes Beendigungssignal an das zweite Funk-Kommunikationsmodul 301 sendet, das daraufhin zunächst ein entsprechendes Abschaltsignal beispielsweise über die Signalleitung L1 an die Rechen- und Dateneinheit 102 ausgibt, und die Rechen- und Dateneinheit 102 dann entsprechend das erste Funk-Kommunikationsmodul 103 deaktiviert. Das zweite Funk-Kommunikationsmodul 301 kann dann nach Abgabe des Abschaltsignals in den Standby-Modus übergehen, oder kann zunächst auf ein Bestätigungssignal von der Rechen- und Dateneinheit 102, beispielsweise über die Signalleitung L2, warten, das eine Deaktivierung des ersten Funk-Kommunikationsmoduls 103 angibt, bis es dann in den Standby-Modus übergeht.

Bevor das zweite Funk-Kommunikationsmodul 301 in den Standby-Modus übergeht, kann es ein entsprechendes Signal an die Spannungsschalteinheit 302 ausgeben, damit diese die Ausgabe der Versorgungsspannung V1 an die Rechen- und Dateneinheit 102 unterbricht. Dieses kann beispielsweise nach Verstreichen einer vorbestimmten Zeitdauer nach dem "Runterfahren" der Rechen- und Dateneinheit 102 erfolgen. Das heißt, es muss je nachdem von wem die Deaktivierung des ersten Funk-Kommunikationsmoduls 103 und des zweiten Funk-Kommunikationsmoduls 301 initiiert wird, gewährleistet werden, dass die Unterbrechung der Zufuhr der Versorgungsspannung V1 zu der Rechen- und Dateneinheit 102 erst durchgeführt wird, wenn das erste Funk-Kommunikationsmodul 103 deaktiviert wurde bzw. seine Prozesse beendet hat und auch die Rechen- und Dateneinheit 102 ihre Prozesse vollständig beendet hat und somit die Spannungsversorgung unterbrochen werden kann.

Wenn somit beispielsweise eine hohe Übertragungsrate des ersten Funk-Kommunikationsmoduls zur Datenübertragung zwischen dem ersten Funk-Kommunikationsmodul und der externen Funk-Vorrichtung 104 gefordert ist und zusätzlich Sicherheit gegenüber Angriffen per DoS gewünscht wird oder unerwünschte Verbindungen mit anderen Funk-Vorrichtungen vermieden werden soll, ist es vorteilhaft, ein Bluetooth-Classic-Modul, das eine derartig hohe Datenübertragungsrate bietet, für das erste Funk-Kommunikationsmodul zu verwenden und ein Bluetooth-Low-Energy-Modul, das diese hohe Datenübertragungsrate nicht bietet, aber die Sicherheit gegenüber unerwünscheten Verbindungen bietet, wie es dem für das erste Funk-Kommunikationsmodul verwendete Bluetooth-Classic-Modul nicht möglich ist, für das zweite Funk-Kommunikationsmodul zu verwenden.

## Patentansprüche

1. Datenkommunikationsvorrichtung, die aufweist:
eine Rechen- und Dateneinheit (102, 202), die ein erstes Funk-Kommunikationsmodul (103, 203) zum drahtlosen Datenaustausch mit einer externen Funk-Vorrichtung (104, 204) enthält oder die mit dem ersten Funk-Kommunikationsmodul (103, 203) verbunden ist,
ein zweites Funk-Kommunikationsmodul (205), das drahtlos mit der externen Funk-Vorrichtung (104, 204) kommuniziert, und
einen Speicher (207), der Identifikationsdaten des ersten Funk-Kommunikationsmoduls (103, 203) speichert, wobei
das erste Funk-Kommunikationsmodul (103, 203) in einem Empfangs-Modus betrieben wird, in dem es für die externe Funk-Vorrichtung (104, 204) nicht erkennbar ist, aber beim Empfang von seinen Identifikationsdaten von der externen Funk-Vorrichtung (104, 204) bereit zum Aufbau einer Verbindung und zum anschließenden Datenaustausch mit der externen Funk-Vorrichtung (104, 204) ist,
das zweite Funk-Kommunikationsmodul (205) in einem Standby-Modus betrieben wird, in dem es auf eine Kommunikationsanfrage von der externen Funk-Vorrichtung (104, 204) wartet,
wenn das zweite Funk-Kommunikationsmodul (205) eine Kommunikationsanfrage von der externen Funk-Vorrichtung (104, 204) empfängt, das zweite Funk-Kommunikationsmodul (205) nach dem Aufbau einer Funk-Kommunikationsverbindung mit der externen Funk-Vorrichtung (104, 204) die Identifikationsdaten des ersten Funk-Kommunikationsmoduls (103, 203) aus dem Speicher (207) ausliest und an die externe Funk-Vorrichtung (104, 204) sendet, **dadurch gekennzeichnet, dass**
die Datenkommunikationseinheit außerdem aufweist:
einen Versorgungsspannungseingang (101),
eine Einschalteinheit (105, 405), die mit dem Versorgungsspannungseingang (101) gekoppelt ist und einen Spannungsausgang aufweist, der mit der Rechen- und Dateneinheit (102, 202) verbunden ist, wobei
die Einschalteinheit (105, 405) das zweite Funk-Kommunikationsmodul (205) enthält,
wenn das zweite Funk-Kommunikationsmodul (205) eine Kommunikationsanfrage von der externen Funk-Vorrichtung (104, 204) empfängt, das zweite Funk-Kommunikationsmodul (205) bewirkt, dass die Einschalteinheit (105, 405) der Rechen- und Dateneinheit (102, 202) eine Versorgungsspannung (V1) über den Spannungsausgang zuführt, um die Rechen- und Dateneinheit (102, 202) zu aktivieren und das erste Funk-Kommunikationsmodul (103, 203) zu aktivieren und in den Empfangs-Modus zu versetzen,
wenn der Datenaustausch mit der externen Funk-Vorrichtung (104, 204) beendet ist, das zweite Funk-Kommunikationsmodul (205) in den Standby-Modus übergeht.

2. Datenkommunikationsvorrichtung nach Anspruch 1, wobei das erste Funk-Kommunikationsmodul (103, 203) ein Bluetooth-Kommunikationsmodul ist und /oder, wobei das zweite Funk-Kommunikationsmodul (205) ein Bluetooth-Kommunikationsmodul ist.

3. Datenkommunikationsvorrichtung nach einem der Ansprüche 1 bis 2, wobei das zweite Funk-Kommunikationsmodul (205) gleichzeitig nur eine Kommunikationsverbindung mit einer externen Funk-Vorrichtung eingeht.

4. Datenkommunikationsvorrichtung nach einem der Ansprüche 1 bis 3, wobei das erste Funk-Kommunikationsmodul (103, 203) dafür angepasst ist, dass es eine höhere Datenübertragungsrate und im Standby-Modus einen höheren Energieverbrauch als das zweite Funk-Kommunikationsmodul (205) aufweist.

5. Datenkommunikationsvorrichtung nach Anspruch 3 oder 4, wobei
eine Spannungsversorgungseinheit (106) zwischen den Versorgungsspannungseingang und die Einschalteinheit (105, 405) geschaltet ist, und
die Spannungsversorgungseinheit (106) einen ladbaren Akkumulator aufweist.

6. Datenkommunikationsvorrichtung nach einem der Ansprüche 3 bis 5, wobei, wenn der Datenaustausch beendet ist, das zweite Funk-Kommunikationsmodul (205) bewirkt, dass die Einschalteinheit (105, 405) die Zufuhr der Versorgungsspannung (V1) über den Spannungsausgang zu der Rechen- und Dateneinheit (102, 202) unterbricht.

7. Datenkommunikationsvorrichtung nach einem der Ansprüche 3 bis 6, wobei die Einschalteinheit (105, 405) und die Rechen- und Dateneinheit (102, 202) über eine Signalleitung (L1) miteinander verbunden sind, über die das zweite Funk-Kommunikationsmodul (205) ein Einschaltsignal an die Rechen- und Dateneinheit (102, 202) zum Aktivieren der Rechen- und Dateneinheit (102, 202) nach dem Verstreichen einer vorbestimmten ersten Zeitdauer nach dem Zuführen der Versorgungsspannung (V1) von der Einschalteinheit (105, 405) zu der Rechen- und Dateneinheit (102, 202) sendet, wobei vorzugsweise das zweite Funk-Kommunikationsmodul über die Signalleitung (L1) auch ein Ausschaltsignal an die Rechen- und Dateneinheit (102, 202) zum Deaktivieren der Rechen- und Dateneinheit (102, 202) sendet, bevor die Einschalteinheit (105, 405) nach dem Verstreichen einer vorbestimmten zweiten Zeitdauer die Zufuhr der Versorgungsspannung (V1) über den Spannungsausgang zu der Rechen- und Dateneinheit (102, 202) unterbricht.

8. Verfahren zur Datenkommunikation, das aufweist:
Betreiben eines zweiten Funk-Kommunikationsmoduls (205) in einem Standby-Modus, in dem es auf eine Kommunikationsanfrage von einer Funk-Vorrichtung (104, 204) wartet,
wenn das zweite Funk-Kommunikationsmodul (205) eine Kommunikationsanfrage von der Funk-Vorrichtung (104, 204) empfangen hat,
Aufbauen einer Funk-Kommunikationsverbindung zwischen dem zweiten Funk-Kommunikationsmodul (205) und der Funk-Vorrichtung (104, 204) und Auslesen von Identifikationsdaten des ersten Funk-Kommunikationsmoduls (103, 203) aus einem Speicher (207) durch das zweite Funk-Kommunikationsmodul (205), und
Senden der Identifikationsdaten von dem zweiten Funk-Kommunikationsmodul an die Funk-Vorrichtung (104, 204),
Betreiben eines ersten Funk-Kommunikationsmoduls (103, 203) in einem Empfangs-Modus, in dem es für die Funk-Vorrichtung (104, 204) nicht erkennbar ist, aber beim Empfang von seinen Identifikationsdaten von der Funk-Vorrichtung (104, 204) bereit zum Aufbau einer Verbindung und zum anschließenden drahtlosen Datenaustausch mit der Funk-Vorrichtung (104, 204) ist,
wenn das zweite Funk-Kommunikationsmodul (205) eine Kommunikationsanfrage von der externen Funk-Vorrichtung (104, 204) empfängt, das zweite Funk-Kommunikationsmodul (205) bewirkt, dass einer Rechen- und Dateneinheit (102, 202) eine Versorgungsspannung (V1) von einer Einschalteinheit (105, 405) zugeführt wird, um die Rechen- und Dateneinheit (102, 202) zu aktivieren und das erste Funk-Kommunikationsmodul (103, 203) zu aktivieren und in den Empfangs-Modus zu versetzen,
Aufbauen einer Funk-Kommunikationsverbindung zwischen dem ersten Funk-Kommunikationsmodul (103, 203) und der Funk-Vorrichtung (104, 204) und anschließendes Austauschen von Daten zwischen dem ersten Funk-Kommunikationsmodul (103, 203) und der Funk-Vorrichtung (104, 204), und
wenn der Datenaustausch beendet ist, Übergehen des zweiten Funk-Kommunikationsmoduls (205) in den Standby-Modus.

9. Verfahren zur Datenkommunikation nach Anspruch 8, wobei das erste Funk-Kommunikationsmodul (103, 203) mittels Bluetooth kommuniziert und/oder das zweite Funk-Kommunikationsmodul (205) mittels Bluetooth kommuniziert.

10. Verfahren zur Datenkommunikation nach einem der Ansprüche 8 bis 9, wobei das zweite Funk-Kommunikationsmodul (205) gleichzeitig nur eine Kommunikationsverbindung mit einer Funk-Vorrichtung (104, 204) eingeht.

11. Verfahren zur Datenkommunikation nach einem der Ansprüche 8 bis 10, wobei das erste Funk-Kommunikationsmodul (103, 203) eine höhere Datenübertragungsrate und im Standby-Modus einen höheren Energieverbrauch als das zweite Funk-Kommunikationsmodul (205) aufweist.

12. Verfahren zur Datenkommunikation nach Anspruch 10 oder 11, wobei
der Einschalteinheit (105, 405) von einer Spannungsversorgungseinheit (106) eine Eingangsspannung zugeführt wird, und
die Spannungsversorgungseinheit (106) einen ladbaren Akkumulator aufweist.

13. Verfahren zur Datenkommunikation nach einem der Ansprüche 10 bis 12, wobei, wenn der Datenaustausch beendet ist, mittels des zweiten Funk-Kommunikationsmoduls (205) bewirkt wird, dass die Einschalteinheit (105, 405) die Zufuhr der Versorgungsspannung (V1) zu der Rechen- und Dateneinheit (102, 202) unterbricht.

14. Verfahren zur Datenkommunikation nach einem der Ansprüche 10 bis 13, wobei ein Einschaltsignal von dem zweiten Funk-Kommunikationsmodul (205) an die Rechen- und Dateneinheit (102, 202) zum Aktivieren der Rechen- und Dateneinheit (102, 202) nach dem Verstreichen einer vorbestimmten ersten Zeitdauer nach dem Zuführen der Versorgungsspannung (V1) von der Einschalteinheit (105, 405) zu der Rechen- und Dateneinheit (102, 202) gesendet wird, wobei vorzugsweise auch ein Ausschaltsignal von dem zweiten Funk-Kommunikationsmodul (205) an die Rechen- und Dateneinheit (102, 202) zum Deaktivieren der Rechen- und Dateneinheit (102, 202) gesendet wird, bevor nach dem Verstreichen einer vorbestimmten zweiten Zeitdauer die Zufuhr der Versorgungsspannung (V1) von der Einschalteinheit (105, 405) zu der Rechen- und Dateneinheit (102, 202) unterbrochen wird.

## Claims

1. Data communication device, having:
a computation and data unit (102, 202) which includes a first radio communication module (103, 203) for wireless data exchange with an external radio device (104, 204) or is connected to the first radio communication module (103, 203),
a second radio communication module (205) which communicates wirelessly with the external radio device (104, 204), and
a memory (207) which stores identification data for the first radio communication module (103, 203), wherein
the first radio communication module (103, 203) is operated in a receiving mode in which it is not detectable by the external radio device (104, 204) but, upon receipt of its identification data by the external radio device (104, 204), is ready to establish a connection and ready for subsequent data exchange with the external radio device (104, 204),
the second radio communication module (205) is operated in a standby mode in which said second radio communication module waits for a communication query from the external radio device (104, 204),
when the second radio communication module (205) receives a communication query from the external radio device (104, 204) and, after establishing a radio communication connection with the external radio device (104, 204), the second radio communication module (205) reads the identification data for the first radio communication module (103, 203) from the memory (207) and sends said identification data to the external radio device (104, 204), **characterised in that**
the data communication device further has:
a supply voltage input (101),
a switch-on unit (105, 405) which is coupled to the supply voltage input (101) and has a voltage output connected to the computation and data unit (102, 202), wherein
the switch-on unit (105, 405) includes the second radio communication module (205),
when the second radio communication module (205) receives a communication query from the external radio device (104, 204), the second radio communication module (205) causes the switch-on unit (105, 405) to deliver a supply voltage (V1) to the computation and data unit (102, 202) via the voltage output in order to activate the computation and data unit (102, 202) and to activate the first radio communication module (103, 203) and switch it to the receiving mode,
when the data exchange with the external radio device (104, 204) is completed, the second radio communication module (205) changes to the standby mode.

2. Data communication device according to claim 1, wherein the first radio communication module (103, 203) is a Bluetooth communication module and/or wherein the second radio communication module (205) is a Bluetooth communication module.

3. Data communication device according to any of claims 1 to 2, wherein the second radio communication module (205) establishes only one communication connection to an external radio device at a time.

4. Data communication device according to any of claims 1 to 3, wherein the first radio communication module (103, 203) is adapted to have a higher data transmission rate and in the standby mode a higher energy consumption than the second radio communication module (205).

5. Data communication device according to claim 3 or 4, wherein
a voltage supply unit (106) is connected between the supply voltage input and the switch-on unit (105, 405), and
the voltage supply unit (106) has a chargeable accumulator.

6. Data communication device according to any of claims 3 to 5, wherein, when the data exchange is completed, the second radio communication module (205) causes the switch-on unit (105, 405) to interrupt the delivery of the supply voltage (V1) via the voltage output to the computation and data unit (102, 202).

7. Data communication device according to any of claims 3 to 6, wherein the switch-on unit (105, 405) and the computation and data unit (102, 202) are connected to each other by a signal line (L1) via which the second radio communication module (205) sends a switch-on signal to the computation and data unit (102, 202) to activate the computation and data unit (102, 202) after the expiration of a predetermined first time period upon delivery of the supply voltage (V1) from the switch-on unit (105, 405) to the computation and data unit (102, 202), wherein the second radio communication module preferably also sends a switch-off signal via the signal line (L1) to the computation and data unit (102, 202) to deactivate the computation and data unit (102, 202) before the switch-on unit (105, 405), after the expiration of a predetermined second time period, interrupts the delivery of the supply voltage (V1) via the voltage output to the computation and data unit (102, 202).

8. Method for data communication, having the steps of:
operating a second radio communication module (205) in a standby mode in which it waits for a communication query from a radio device (104, 204),
when the second radio communication module (205) has received a communication query from the radio device (104, 204):
establishing a radio communication connection between the second radio communication module (205) and the radio device (104, 204), and reading identification data for the first radio communication module (103, 203) from a memory (207) by the second radio communication module (205), and
sending the identification data from the second radio communication module to the radio device (104, 204),
operating a first radio communication module (103, 203) in a receiving mode in which it is not detectable by the radio device (104, 204) but, upon receipt of its identification data by the radio device (104, 204), is ready to establish a connection and ready for subsequent wireless data exchange with the radio device (104, 204),
when the second radio communication module (205) receives a communication query from the external radio device (104, 204), the second radio communication module (205) causes a computation and data unit (102, 202) to be delivered a supply voltage (V1) by a switch-on unit (105, 405) in order to activate the computation and data unit (102, 202) and to activate the first radio communication module (103, 203) and switch it to the receiving mode,
establishing a radio communication connection between the first radio communication module (103, 203) and the radio device (104, 204) and then exchanging data between the first radio communication module (103, 203) and the radio device (104, 204), and
when the data exchange is completed, switching the second radio communication module (205) to the standby mode.

9. Method for data communication according to claim 8, wherein the first radio communication module (103, 203) communicates by means of Bluetooth and/or the second radio communication module (205) communicates by means of Bluetooth.

10. Method for data communication according to any of claims 8 to 9, wherein the second radio communication module (205) establishes only one communication connection to a radio device (104, 204) at a time.

11. Method for data communication according to any of claims 8 to 10, wherein the first radio communication module (103, 203) has a higher data transmission rate and in the standby mode a higher energy consumption than the second radio communication module (205).

12. Method for data communication according to claim 10 or 11, wherein
the switch-on unit (105, 405) is delivered an input voltage by a voltage supply unit (106), and
the voltage supply unit (106) has a chargeable accumulator.

13. Method for data communication according to any of claims 10 to 12, wherein, when the data exchange is completed, the second radio communication module (205) causes the switch-on unit (105, 405) to interrupt the delivery of the supply voltage (V1) to the computation and data unit (102, 202).

14. Method for data communication according to any of claims 10 to 13, wherein a switch-on signal from the second radio communication module (205) is sent to the computation and data unit (102, 202) to activate the computation and data unit (102, 202) after the expiration of a predetermined first time period upon delivery of the supply voltage (V1) from the switch-on unit (105, 405) to the computation and data unit (102, 202), wherein a switch-off signal from the second radio communication module (205) is preferably also sent to the computation and data unit (102, 202) to deactivate the computation and data unit (102, 202) before the delivery of the supply voltage (V1) from the switch-on unit (105, 405) to the computation and data unit (102, 202) is interrupted after the expiration of a predetermined second time period.

## Revendications

1. Dispositif de communication de données qui présente :
une unité de calcul et de données (102, 202) qui contient un premier module de communication radio (103, 203) pour l'échange de données sans fil avec un dispositif radio externe (104, 204) ou qui est connecté au premier module de communication radio (103, 203),
un second module de communication radio (205) qui communique sans fil avec le dispositif radio externe (104, 204), et
une mémoire (207) qui enregistre des données d'identification du premier module de communication radio (103, 203), dans lequel
le premier module de communication radio (103, 203) fonctionne dans un mode de réception dans lequel il n'est pas reconnaissable par le dispositif radio externe (104, 204), mais est prêt à établir une connexion puis à échanger des données avec le dispositif radio externe (104, 204) à la réception de ses données d'identification du dispositif radio externe (104, 204),
le second module de communication radio (205) fonctionne dans un mode veille, dans lequel il attend une demande de communication du dispositif radio externe (104, 204),
lorsque le second module de communication radio (205) reçoit une demande de communication du dispositif radio externe (104, 204), le second module de communication radio (205), après avoir établi une connexion de communication radio avec le dispositif radio externe (104, 204), lit les données d'identification du premier module de communication radio (103, 203) dans la mémoire (207) et les envoie au dispositif radio externe (104, 204), **caractérisé en ce que**
l'unité de communication de données présente en outre :
une entrée de tension d'alimentation (101),
une unité de mise sous tension (105, 405) qui est couplée à l'entrée de tension d'alimentation (101) et présente une sortie de tension qui est connectée à l'unité de calcul et de données (102, 202), dans laquelle
l'unité de mise sous tension (105, 405) contient le second module de communication radio (205),
lorsque le second module de communication radio (205) reçoit une demande de communication du dispositif radio externe (104, 204), le second module de communication radio (205) amène l'unité de mise sous tension (105, 405) à fournir une tension d'alimentation (V1) à l'unité de calcul et de données (102, 202) par l'intermédiaire de la sortie de tension afin d'activer l'unité de calcul et de données (102, 202) et d'activer le premier module de communication radio (103, 203) et de le mettre en mode de réception,
lorsque l'échange de données avec le dispositif radio externe (104, 204) est terminé, le second module de communication radio (205) passe en mode veille.

2. Dispositif de communication de données selon la revendication 1, dans lequel le premier module de communication radio (103, 203) est un module de communication Bluetooth et/ou, dans lequel le second module de communication radio (205) est un module de communication Bluetooth.

3. Dispositif de communication de données selon l'une quelconque des revendications 1 à 2, dans lequel le second module de communication radio (205) établit une seule connexion de communication avec un dispositif radio externe à la fois.

4. Dispositif de communication de données selon l'une quelconque des revendications 1 à 3, dans lequel le premier module de communication radio (103, 203) est adapté de sorte à présenter un débit de transmission de données plus élevé et une consommation d'énergie plus élevée en mode veille que le second module de communication radio (205).

5. Dispositif de communication de données selon la revendication 3 ou 4, dans lequel
une unité d'alimentation électrique (106) est connectée entre l'entrée de tension d'alimentation et l'unité de mise sous tension (105, 405), et
l'unité d'alimentation électrique (106) présente un accumulateur rechargeable.

6. Dispositif de communication de données selon l'une quelconque des revendications 3 à 5, dans lequel, lorsque l'échange de données est terminé, le second module de communication radio (205) amène l'unité de mise sous tension (105, 405) à interrompre l'alimentation de la tension d'alimentation (V1) par l'intermédiaire de la sortie de tension vers l'unité de calcul et de données (102, 202).

7. Dispositif de communication de données selon l'une quelconque des revendications 3 à 6, dans lequel l'unité de mise sous tension (105, 405) et l'unité de calcul et de données (102, 202) sont connectées entre elles par un câble de signaux (L1) par lequel le second module de communication radio (205) envoie un signal de mise sous tension à l'unité de calcul et de données (102, 202) pour activer l'unité de calcul et de données (102, 202) après l'écoulement d'une première durée prédéterminée après que la tension d'alimentation (V1) a été fournie par l'unité de mise sous tension (105, 405) à l'unité de calcul et de données (102, 202), dans laquelle de préférence le second module de communication radio envoie également un signal de coupure par le câble de signaux (L1) à l'unité de calcul et de données (102, 202) pour désactiver l'unité de calcul et de données (102, 202) avant que l'unité de mise sous tension (105, 405) interrompe l'alimentation de la tension d'alimentation (V1) par la sortie de tension à l'unité de calcul et de données (102, 202) après l'écoulement d'une seconde durée prédéterminée.

8. Procédé de communication de données qui présente :
le fonctionnement d'un second module de communication radio (205) en mode veille, dans lequel il attend une demande de communication d'un dispositif radio (104, 204),
lorsque le second module de communication radio (205) a reçu une demande de communication du dispositif radio (104, 204),
l'établissement d'une connexion de communication radio entre le second module de communication radio (205) et le dispositif radio (104, 204) et la lecture de données d'identification du premier module de communication radio (103, 203) dans une mémoire (207) par le second module de communication radio (205), et
l'envoi des données d'identification du second module de communication radio au dispositif radio (104, 204),
le fonctionnement d'un premier module de communication radio (103, 203) dans un mode de réception dans lequel il n'est pas reconnaissable par le dispositif radio (104, 204), mais est prêt à établir une connexion puis à échanger des données sans fil avec le dispositif radio (104, 204) à la réception de ses données d'identification du dispositif radio (104, 204),
lorsque le second module de communication radio (205) reçoit une demande de communication du dispositif radio externe (104, 204), le second module de communication radio (205) amène une unité de calcul et de données (102, 202) à recevoir une tension d'alimentation (V1) par une unité de mise sous tension (105, 405) afin d'activer l'unité de calcul et de données (102, 202) et d'activer le premier module de communication radio (103, 203) et de le mettre en mode de réception,
l'établissement d'une connexion de communication radio entre le premier module de communication radio (103, 203) et le dispositif radio (104, 204) puis l'échange de données entre le premier module de communication radio (103, 203) et le dispositif radio (104, 204), et
lorsque l'échange de données est terminé, le passage du second module de communication radio (205) en mode veille.

9. Procédé de communication de données selon la revendication 8, dans lequel le premier module de communication radio (103, 203) communique au moyen de Bluetooth et/ou le second module de communication radio (205) communique au moyen de Bluetooth.

10. Procédé de communication de données selon l'une quelconque des revendications 8 à 9, dans lequel le second module de communication radio (205) établit une seule connexion de communication avec un dispositif radio (104, 204) à la fois.

11. Procédé de communication de données selon l'une quelconque des revendications 8 à 10, dans lequel le premier module de communication radio (103, 203) présente un débit de transmission de données plus élevé et une consommation d'énergie plus élevée en mode veille que le second module de communication radio (205).

12. Procédé de communication de données selon la revendication 10 ou 11, dans lequel
une tension d'entrée est fournie à l'unité de mise sous tension (105, 405) par une unité d'alimentation électrique (106), et
l'unité d'alimentation électrique (106) présente un accumulateur rechargeable.

13. Procédé de communication de données selon l'une quelconque des revendications 10 à 12, dans lequel, lorsque l'échange de données est terminé, le second module de communication radio (205) est utilisé pour amener l'unité de mise sous tension (105, 405) à interrompre l'alimentation de la tension d'alimentation (V1) à l'unité de calcul et de données (102, 202).

14. Procédé de communication de données selon l'une quelconque des revendications 10 à 13, dans lequel un signal de mise sous tension du second module de communication radio (205) est envoyé vers l'unité de calcul et de données (102, 202) pour activer l'unité de calcul et de données (102, 202) après l'écoulement d'une première durée prédéterminée après que la tension d'alimentation (V1) a été fournie par l'unité de mise sous tension (105, 405) à l'unité de calcul et de données (102, 202), dans lequel un signal de coupure est de préférence également envoyé du second module de communication radio (205) à l'unité de calcul et de données (102, 202) pour désactiver l'unité de calcul et de données (102, 202) avant que, après l'écoulement d'une seconde durée prédéterminée, l'alimentation de la tension d'alimentation (V1) de l'unité de mise sous tension (105, 405) à l'unité de calcul et de données (102, 202) est interrompue.
